# EUROPEAN PATENT APPLICATION

(11) **EP 4 303 632 A1**
(43) Date of publication of application: **10.01.2024**
(21) Application number: 22183601.8
(22) Date of filing: 07.07.2022
(51) Int. Cl.: G02B 1/115

(54) **LIDAR WINDOW, METHOD FOR PREPARING THE SAME, AND SENSOR SYSTEM**

(71) Applicant: Covestro Deutschland AG, 51373 Leverkusen (DE)
(72) Inventor: REN, Tianxiao, Pudong, Shanghai, 201206 (CN); CHEN, Jie, Baoshan District, Shanghai, 201901 (CN); WANG, Bo, Shanghai, 201206 (CN)
(74) Representative: Levpat

(57) **Abstract**

The present invention relates to a LiDAR window, a method for preparing the same, and a sensor system. The LiDAR window comprises the following layers stacked together in the order: a protective layer, a substrate, an adhesive layer and an anti-reflection layer. The LiDAR window of the present invention can meet the functional requirement of laser signal transmission, while also meeting the requirements for automotive exterior decoration, and can be used in a sensor system.

## Description

### TECHNICAL FIELD

The present invention belongs to the field of LiDAR windows. Specifically, the present invention relates to a LiDAR window, a method for preparing the same, and a sensor system.

### BACKGROUND ART

With the development of 5G technology and electronic technology and the nation's increasing emphasis on energy conservation and environmental protection, over the past few years, the automotive industry has taken on new development trends: interconnection, autonomous driving, car sharing, and electrification. Autonomous driving assistance systems (abbreviated as ADAS) have gradually become indispensable for future automobiles. They collect environmental data inside and outside the automobile with various sensors, and perform technical processing such as identifying, detecting and tracking static and dynamic objects with on-board computer and algorithm software, so that the driver can perceive potential dangers in the shortest time possible.

The sensors used in ADAS mainly include cameras, millimeter-wave radar, laser radar and ultrasonic radar, etc., which can detect light, heat, pressure or other variables used for monitoring the state of the automobile. They are commonly located on the front grille, front and rear bumpers, pillar cover plates, roof cover plate, side view mirrors or windshield.

Laser radar, also known as LiDAR (light detection and ranging), detects obstacles and locates objects using laser beams rather than radio waves. LiDAR can emit lower-power, eye-safe infrared pulsed laser beams with a wavelength of 905 nm to determine the time required for a round trip between the laser transmitter and the target, while generating a 3D point cloud image according to the resulting data.

Currently, there are mainly two categories of materials for LiDAR windows. One is a glass material, and the other is a plastic material. Considering that LiDAR needs to be installed on the body of the automobile and conforms to the curvy design of the automobile, and given the factor of collision safety, there is a growing number of LiDAR windows using plastic windows. Plastic windows enjoy many advantages over glass windows, for example, light weight, good impact resistance, the ability to be made into a 3D curved surface to match the styling of the automobile, and be integrated with surrounding spare parts.

LiDAR works by calculating the flight time to locate and measure distance. When the laser transmitter emits laser beams or laser beams are reflected back, the beams would inevitably pass through the radar window. Thus, it is required that the material of the window should be radioparent to infrared rays with a wavelength of 905 nm, and it is also required to have the infrared transmittance as much as possible so that the transmission power can be enhanced to the greatest extent for the purpose of increasing the distance of detection.

In addition to meeting the functional requirement of infrared transmission, the LiDAR plastic window also needs to meet the functional requirements of automotive exterior decoration. The automotive exterior decoration requirements mainly include: weather resistance, wear and scratch resistance, environmental ageing resistance, and so on.

Therefore, it is desirable to develop a LiDAR window in the art which not only meets the requirement of LiDAR infrared optical transmission but also meets requirements for the automotive exterior decoration.

### SUMMARY OF THE INVENTION

An objective of the present invention is to provide a LiDAR window which not only meets the requirement of LiDAR infrared optical transmission but also meets the requirements for automotive exterior decoration.

Another objective of the present invention is to provide a method for preparing the LiDAR window.

Therefore, according to a first aspect, the present invention provides a LiDAR window, comprising the following layers stacked together in the order of:
a protective layer;
a substrate prepared from a thermoplastic material;
an adhesive layer; and
an anti-reflection layer with a refractive index in the range of 1.3-2.4 and a thickness in the range of 50-600 nm, said anti-reflection layer comprising two or more anti-reflection sublayers, wherein at least one anti-reflection sub-layer has a refractive index in the range of 1.5-2.4,
wherein the LiDAR window has a transmittance to infrared rays with a wavelength of 905 nm of at least 94% at an incidence angle of 0°, and a transmittance to infrared rays with a wavelength of 905 nm of at least 87% at an incidence angle of 60°, as measured in accordance with the method described in ISO 13468-2: 2006; and
the LiDAR window has a gloss retention rate of not less than 70%, as measured in accordance with ASTM D 1044-05.

According a second aspect, the present invention provides a method for preparing the aforementioned LiDAR window, comprising the steps of:
i) providing a substrate;
ii) forming an adhesive layer and a protective layer respectively on two opposite surfaces of the substrate;
iii) forming an anti-reflection layer on the adhesive layer; and
iv) optionally, forming an additional anti-reflection layer on the protective layer.

According to a third aspect, the present invention provides a sensor system, comprising:
a LiDAR sensor emitting lasers with a wavelength of 800 nm to 1,600 nm; and
the aforementioned LiDAR window partially or completely surrounding the LiDAR sensor,
wherein the protective layer and the LiDAR sensor are disposed towards two opposite sides of the substrate.

According to a fourth aspect, the present invention provides a vehicle comprising the above sensor system.

The LiDAR window of the present invention can meet the functional requirement of laser signal transmission, while also meeting the requirements for automotive exterior decoration, and can be used in a sensor system.

### BRIEF DESCRIPTION OF THE DRAWINGS

The present invention will be described and explained in detail in conjunction with the figures hereinafter, wherein, A-side and B-side each refer to the surface for the adhesion test.
FIG. 1 shows a schematic diagram of the structure of the assembly prepared in Comparative Example 1.
FIG. 2 shows a schematic diagram of the structure of the assembly prepared in Comparative Example 2.
FIG. 3 shows a schematic diagram of the structure of the assembly prepared in Comparative Example 3.
FIG. 4 shows a schematic diagram of the structure of the assembly prepared in Comparative Example 4.
FIG. 5 shows a schematic diagram of the structure of the assembly prepared in Comparative Example 5.
FIG. 6 shows a schematic diagram of the structure of the assembly prepared in Comparative Example 6.
FIG. 7 shows a schematic diagram of the structure of the assembly prepared in Comparative Example 7.
FIG. 8 shows a schematic diagram of the structure of the LiDAR window prepared in Inventive Example 1.
FIG. 9 shows a schematic diagram of the structure of the LiDAR window prepared in Inventive Example 2.

### DETAILED DESCRIPTION OF THE INVENTION

Various aspects and further objectives, features and advantages of the present invention will be demonstrated in a more comprehensive manner hereinafter.

As noted above, an objective of the present invention is to provide a LiDAR window which meets the requirement of LiDAR infrared optical transmission.

The LiDAR window, for example, a LiDAR window for automobiles, should meet the following major requirements:

### I) Optical requirements

The LiDAR window has a transmittance to infrared rays with a wavelength of 905 nm of at least 94% at an incidence angle of 0°, and a transmittance to infrared rays with a wavelength of 905 nm of at least 87% at an incidence angle of 60°, as measured in accordance with the method described in ISO 13468-2: 2006.

### II) Requirements for automotive exterior decoration, including, inter alia, adhesion, weather resistance, scratch resistance, salt mist resistance and environmental resistance

### LiDAR window

According to a first aspect, the present invention provides a LiDAR window, comprising the following layers stacked together in the order of:
a protective layer;
a substrate prepared from a thermoplastic material;
an adhesive layer; and
an anti-reflection layer with a refractive index in the range of 1.3-2.4 and a thickness in the range of 50-600 nm, said anti-reflection layer comprising two or more anti-reflection sublayers, wherein at least one anti-reflection sub-layer has a refractive index in the range of 1.5-2.4,
wherein the LiDAR window has a transmittance to infrared rays with a wavelength of 905 nm of at least 94% at an incidence angle of 0°, and a transmittance to infrared rays with a wavelength of 905 nm of at least 87% at an incidence angle of 60°, as measured in accordance with the method described in ISO 13468-2: 2006; and
the LiDAR window has a gloss retention rate of not less than 70%, as measured in accordance with ASTM D 1044-05.

Preferably, the LiDAR window of the present invention has a transmittance to infrared rays with a wavelength of 905 nm of at least 92% at an incidence angle of 30°.

Preferably, the LiDAR window of the present invention further comprises an additional anti-reflection layer disposed on the protective layer. The additional anti-refection layer and the substrate are disposed on two opposite surfaces of the protective layer.

In the present application, unless otherwise specified, the gloss is measured in accordance with ASTM D523-2014.

In the present application, unless otherwise specified, the transmittance to infrared rays (or IR transmittance) is measured in accordance with the method described in ISO13468-2:2006.

In the present application, although other layers than the substrate have certain anti-reflection effect, the anti-reflection layer refers to the one adjacent to the adhesive layer, and the additional anti-reflection layer refers to the one disposed on the protective layer.

### Protective layer

The LiDAR window according to the present invention comprises a protective layer.

The protective layer possesses at least one of the following properties: weather resistance, scratch resistance, chemical resistance, and impermeability.

Preferably, the protective layer is used to protect the entire LiDAR window from environmental and scratch influences, while acting together with the substrate and other layers to fulfill the anti-reflection effect.

In the description and claims of the present application, the anti-reflection effect refers to reducing the intensity of reflected infrared light, thereby increasing the intensity of transmitted infrared light. In other words, it refers to improving the infrared transmittance of the substrate .

Preferably, the protective layer is formed with an organosilicon coating material, an acrylate coating material, or an organosilicon-acrylate coating material with a refractive index in the range of 1.20-1.55.

The organosilicon-acrylate coating material herein refers to a mixture of organosilicon and acrylate.

In the description and claims of the present application, unless otherwise specified, the refractive index generally refers to the refractive index at a wavelength of 589 nm.

The refractive index described in the description and claims of the present application is measured in accordance with the standard GB/T7962.1-2010 "Test Methods of Colorless Optical Glass" Part 1: Refractive Index and Coefficient of Dispersion.

As a coating material that can be used as a protective layer in the LiDAR window of the present invention, mention may be made of AS4700 (with a refractive index in the range of 1.40-1.44) and SHP 470 FT2050, PHC587C-2, UVHC3000, UVHC5000 from Momentive Performance Materials.

The protective layer may be one layer or consist of at least two sublayers.

For example, the protective layer may consist of two layers, wherein the first protective layer in contact with the substrate is weather-resistant, and the second protective layer facing toward the external environment is mainly scratch-resistant.

Preferably, the total thickness of the protective layer is in the range of 0.5-20 µm.

Preferably, the protective layer not only has anti-reflection effect but also has excellent abrasion resistance, scratch resistance, salt mist resistance and environmental resistance, which can well protect the substrate and meet the requirements automotive exterior decoration.

### Substrate

The LiDAR window according to the present invention comprises a substrate.

The substrate is prepared from a thermoplastic material.

The thermoplastic material consists of a polymer resin and optional additives. The additives may be those commonly used in the thermoplastic material, for example, one or more of colorants, heat stabilizers, mold release agents, UV absorbers, flame retardants, antistatic agents and flow improvers, and they are in conventional additive amounts, with the proviso that the types and amounts of the additives do not adversely affect the objective of the present invention.

Preferably, the substrate has a transmittance to infrared rays with a wavelength of 905 nm of at least 85% at an incident angle of 0°, as measured in accordance with the method described in DIN ISO 13468-2:2006.

Preferably, the substrate is prepared from a thermoplastic material with a refractive index in the range of 1.45-1.75.

Preferably, the thermoplastic material has a transmittance to a light in the range of 380-780 nm of less than 25.0%, as measured in accordance with DIN ISO 13468-2:2006 (D65, 10°) at a layer thickness of 4 mm.

Preferably, the substrate is prepared from a thermoplastic material comprising a polymer resin selected from the group consisting of: polycarbonate (PC), polyetherimide (PEI), polyimide (PI), polysulfone (PSU), polyarylate (PAR), polyethersulfone (PES) and polyphenylsulfone (PPSU).

In the present application, when it comes to the thermoplastic material comprising a polymer resin, this means that the polymer resin constitutes a major part of the thermoplastic material, accounting for at least 70 wt. % of the thermoplastic material, relative to the total weight of the thermoplastic material.

The polycarbonate as described in the present application refers to an aromatic polycarbonate, unless the context clearly indicates otherwise.

The polycarbonate can be a homopolycarbonate and a copolycarbonate.

The aromatic polycarbonate has a melt volume flow rate (MVR) of 8 to 20 cm³/(10 min), as measured in accordance with ISO 1133-1:2012-03 (300°C, 1.2 kg).

More preferably, the polymer resin is selected from a homopolycarbonate based on bisphenol A or a copolycarbonate based on monomeric bisphenol A and 1,1-bis(4-hydroxyphenyl)-3,3,5-trimethylcyclohexane.

As examples of the homopolycarbonate, the Makrolon^{®} series such as Makrolon AX2675ST/978001 from Covestro Polymers (China) Co., Ltd. can be used.

As examples of the copolycarbonate, the APEC^{®} series from Covestro Polymers (China) Co., Ltd., and the LEXAN^{™} XHT series and SLX series from Saudi Basic Industry Corporation (SABIC) can be used.

As specific examples for commercial products of the copolycarbonate, mention may be made of the APEC^{®} series from Covestro Deutschland AG, such as APEC^{®} 1895, APEC^{®} 2095, APEC^{®} 2097 and APEC^{®} DP1-9389.

Preferably, the thickness of the substrate is in the range of 0.5-5 mm.

### Adhesive layer

The LiDAR window according to the present invention comprises an adhesive layer.

The adhesive layer is used to enhance the adhesion between the substrate and the anti-reflection layer, and also has the anti-reflection effect.

Preferably, the adhesive layer is formed with an organosilicon coating material, an acrylate coating material, or an organosilicon-acrylate coating material with a refractive index in the range of 1.20-1.55.

The organosilicon-acrylate coating material herein refers to a mixture of organosilicon and acrylate.

As a coating material that can be used as an adhesive layer in the LiDAR window of the present invention, mention may be made of PHC587C-2 (with a refractive index of 1.42) from Momentive Performance Materials.

Preferably, the thickness of the adhesive layer is in the range of 0.5-10 µm.

### Anti-reflection layer

The LiDAR window according to the present invention comprises an anti-reflection layer.

The anti-reflection layer has a refractive index in the range of 1.3-2.4 and a thickness in the range of 50-600 nm, said anti-reflection layer comprising two or more anti-reflection sublayers, wherein at least one anti-reflection sub-layer has a refractive index in the range of 1.5-2.4.

For example, the anti-reflection layer can be formed with a material selected from the group consisting of MgF₂, SiO₂, Al₂O₃, Ti₂O₃, Ti₃O₅, Nb₂O₃, ZrO₂ and silicon nitride.

The anti-reflection layer can be composed of two or more sublayers of the same or different thickness, comprising different materials selected from the group consisting of MgF₂, SiO₂, Al₂O₃, Ti₂O₃, Ti₃O₅, Nb₂O₃, ZrO₂ and silicon nitride, wherein each sublayer has a thickness in the range of 10-300 nm.

Preferably, the anti-reflection layer comprises a SiO₂ layer and a Ti₃O₅ layer.

Preferably, the anti-reflection layer comprises alternately arranged SiO₂ layers and Ti₃O₅ layers, wherein each SiO₂ layer has a thickness in the range of 10-60 nm, and each Ti₃O₅ layer has a thickness in the range of 10-200 nm.

Preferably, the anti-reflection layer comprises alternately arranged SiO₂ layers and Nb₂O₅ layers, wherein each SiO₂ layer has a thickness in the range of 20-150 nm and each Nb₂O₅ layer has a thickness in the range of 10-100 nm.

Preferably, the anti-reflection layer comprises alternately arranged SiO₂ layers and ZrO₂ layers, wherein each SiO₂ layer has a thickness in the range of 20-150 nm, and each ZrO₂ layer has a thickness in the range of 10-100 nm.

Preferably, the anti-reflection layer includes or consists of the sub-layers shown in any one of Tables 1-3.

**Table 1**

| Components | Thickness |
|---|---|
| SiO₂ | 10-40 nm |
| Ti₃O₅ | 50-200 nm |
| SiO₂ | 30-60 nm |
| Ti₃O₅ | 20-50 nm |
| SiO₂ | 30-60 nm |

**Table 2**

| Components | Thickness |
|---|---|
| SiO₂ | 30-60 nm |
| Nb₂O₅ | 20-100 nm |
| SiO₂ | 30-150 nm |
| Nb₂O₅ | 10-40 nm |
| SiO₂ | 30-150 nm |

**Table 3**

| Components | Thickness |
|---|---|
| SiO₂ | 20-80 nm |
| ZrO₂ | 30-100 nm |
| SiO₂ | 20-150 nm |
| ZrO₂ | 10-40 nm |
| SiO₂ | 30-60 nm |

### Additional anti-reflection layer

Preferably, the LiDAR window of the present invention further comprises an additional anti-reflection layer disposed on the protective layer.

The additional anti-reflection layer can be prepared from a material with a refractive index in the range of 1.3-2.4. For example, the additional anti-reflection layer can be formed with a material selected from the group consisting of SiO₂, Nb₂O₃, ZrO₂ and silicon nitride.

If present, the additional anti-reflection layer has a thickness in the range of 50-600 nm.

The anti-reflection layer can be composed of two or more sublayers of the same or different thickness, comprising different materials selected from the group consisting of SiO₂, Nb₂O₃, ZrO₂ and silicon nitride, wherein each sublayer has a thickness in the range of 5-200 nm.

Preferably, the anti-reflection layer comprises a SiO₂ layer and a silicon nitride layer.

Preferably, the anti-reflection layer comprises alternately arranged SiO₂ layers and silicon nitride layers, wherein each SiO₂ layer has a thickness in the range of 5-200 nm, and each silicon nitride layer has a thickness in the range of 5-200 nm.

Preferably, the anti-reflection layer includes or consists of the sub-layers shown in Table 4.

**Table 4**

| | |
|---|---|
| SiO₂ | 100-200nm |
| Si₃N₄ | 100-200 nm |
| SiO₂ | 20-60 nm |
| Si₃N₄ | 10-30 nm |
| SiO₂ | 100-200 nm |

### Method for preparing the LiDAR window

According to a second aspect, the present invention provides a method for preparing the aforementioned LiDAR window, comprising the steps of:
i) providing a substrate;
ii) forming an adhesive layer and a protective layer respectively on two opposite surfaces of the substrate;
iii) forming an anti-reflection layer on the adhesive layer; and
iv) optionally, forming an additional anti-reflection layer on the protective layer.

### Step i: providing a substrate

The substrate can be purchased or self-prepared.

For example, the substrate can be prepared by standard injection molding.

Preferably, the substrate is prepared from a thermoplastic material comprising a polymer resin selected from the group consisting of: polycarbonate (PC), polyetherimide (PEI), polyimide (PI), polysulfone (PSU), polyarylate (PAR), polyethersulfone (PES) and polyphenylsulfone (PPSU) by standard injection molding.

More preferably, the substrate is prepared from a thermoplastic material comprising a polycarbonate.

Injection molding can be carried out with a high-precision injection molding machine, more preferably an electric injection molding machine, which makes it possible to precisely control injection stroke, mold stroke, pressure and speed.

During the injection molding process, the mold temperature is controlled within the range of 90-160°C.

### Step ii: forming an adhesive layer and a protective layer respectively on two opposite surfaces of the substrate

Preferably, the substrate is subjected to destaticizing and/or cleaning treatment prior to the formation of an adhesive layer and a protective layer.

Destaticizing can be carried out, for example, by blowing with deionized air (for example, for 10 seconds to 1 minute).

Cleaning can be carried out, for example, by washing with isopropanol.

The method of applying an adhesive layer and a protective layer is not particularly defined, including but not limited to flow coating, dip coating, spin coating, spray coating, scrape coating and roller coating.

For example, an adhesive layer and a protective layer can be formed respectively on two opposite surfaces of the substrate, by flow coating or other processes.

Preferably, the coating material for forming an adhesive layer is applied onto one surface of the substrate by flow coating, flashed off at room temperature (23-25°C) and 35-55 RH% humidity for 5-30 minutes, followed by baking at the temperature of 100-140°C for 15-60 minutes, to form an adhesive layer on the substrate.

Preferably, the coating material for forming a protective layer is applied onto the substrate by flow coating, flashed off at room temperature (23-25°C) and 35-55 RH% humidity for 5-30 minutes, followed by baking at the temperature of 100-140°C for 15-60 minutes, to form a protective layer on the substrate.

### Step iii: forming an anti-reflection layer on the adhesive layer

Preferably, the destaticizing treatment is carried out prior to the formation of the anti-reflection layer.

Destaticizing can be carried out, for example, by blowing with deionized air (for example, for 10 seconds to 1 minute).

The anti-reflection layer can be formed by a PVD (Physical Vapor Deposition) process or other processes.

Specifically, the PVD process may be an evaporation process or a magnetron sputtering process.

In the case of using the PVD process, preferably, the deposition temperature is in the range of 150-300°C.

Preferably, the coating material for forming an anti-reflection layer is applied onto the adhesive layer by the PVD process, and then annealed at 150-250°C for 1-3 hours, followed by condensation to form an anti-reflection layer.

For example, in a vacuum chamber, the material of an anti-reflection layer is heated and evaporated so that its atoms or molecules vaporize and escape from the surface to form a vapor flow incident on the surface of the adhesive layer, and annealed at 150-250°C for 1-3 hours, followed by sufficient crystallization to form an anti-reflection layer.

### Step iv: forming an additional anti-reflection layer on the protective layer

In some embodiments, the LiDAR widow of the present invention further comprises an additional anti-reflection layer disposed on the protective layer.

Preferably, the destaticizing treatment is carried out prior to the formation of the additional anti-reflection layer.

Destaticizing can be carried out, for example, by blowing with deionized air (for example, for 10 seconds to 1 minute).

The additional anti-reflection layer can be formed by a CVD (Chemical Vapor Deposition) process or other processes.

Specifically, Inductively Coupled Plasma Chemical Vapor Deposition (ICPCVD) process can be employed to form a plasma at a lower temperature by inductive coupling, and subject it to chemical vapor deposition for film growth.

For example, the following process parameters can be used: pressure: 1-10 mTorr, plasma density: about 5×10¹¹/cm², deposition temperature: 60-250°C.

The reaction materials can be selected according to the final target composition of the additional anti-reflection layer. For example, the materials for forming the SiO₂ layer are nitrogen and oxygen, and the materials for forming the silicon nitride layer are nitrogen and silane.

There is no special requirement for the sequence of forming each layer, so long as the LiDAR window of the present invention can finally be formed. Certainly, it is obvious that the adhesive layer must be formed prior to the formation of the anti-reflection layer.

The adhesive layer can be formed prior to, after, or at the same time as the formation of the protective layer.

The anti-reflection layer can be formed prior to, after, or at the same time as the formation of the protective layer.

The additional anti-reflection layer can be formed prior to, after, or at the same time as the formation of the protective layer.

### Sensor system and vehicle

The LiDAR window of the present invention can meet the functional requirement of laser signal transmission, while also meeting the requirements for automotive exterior decoration.

According to a third aspect, the present invention provides a sensor system, comprising:
a LiDAR sensor emitting lasers with a wavelength of 800 nm to 1,600 nm; and
the aforementioned LiDAR window partially or completely surrounding the LiDAR sensor,
wherein the protective layer and the LiDAR sensor are disposed towards two opposite sides of the substrate.

The LiDAR sensor emits laser pulses in the range of 800 nm to 1,600 nm, preferably in the range of 820 nm to 1,500 nm, more preferably in the range of 850 nm to 1,300 nm, and in particular preferably in the range of 880 nm to 930 nm.

Advantageously, the distance from the LiDAR sensor to the window is in the range of 0.1 mm to 1000 mm, preferably in the range of 1 mm to 500 mm, more preferably in the range of 10 mm to 300 mm, and in particular preferably in the range of 50 mm to 300 mm. The distance selected is basically contingent on the construction of the sensor system, as it should be selected to adequately protect the sensor from impacts.

According to a fourth aspect, the present invention provides a vehicle comprising the aforementioned sensor system.

In the present application, when it comes to infrared transmittance, unless otherwise specified, it generally refers to transmittance to infrared rays with a wavelength of 905 nm.

In the present application, when it comes to applying a certain material onto a certain layer, unless otherwise specified, it generally refers to completely covering at least one surface of the layer with the material.

In the present application, the terms "comprising" and "including" cover the circumstances further comprising or including other elements not expressly mentioned and the circumstances comprising the elements mentioned.

Unless otherwise defined, all technical and scientific terms used herein have the same meaning as commonly understood by a person of ordinary skill in the field the present invention belongs to. When the definition of a term in the present description conflicts with the meaning as commonly understood by a person of ordinary skill in the field the present invention belongs to, the definition described herein shall prevail.

Unless otherwise specified, all numerical values expressing the amount, infrared transmittance, thickness and the like used in the description and claims should be understood as being modified by the term "about". Therefore, unless indicated to the contrary, the numerical value parameters described herein are approximate values that may be varied according to the desired properties.

### Examples

The conception, specific structure and the technical effect of the present invention will be further illustrated hereinafter in conjunction with the Examples and drawings, so that a person of ordinary skill in the art can fully understand the objectives, features and effects of the present invention. It is not difficult for the skilled person to understand that the Examples herein are for the purpose of illustration only, and the scope of the present invention is not limited thereto.

### The raw materials used:

Polycarbonate: having a Vicat softening temperature of 143°C, a refractive index of 1.586, a melt volume flow rate (MVR) of 12cm³/(10min), as measured in accordance with ISO 1133-1:2012-03 (300°C, 1.2 kg), available under the trade name of Makrolon AX2675ST/978001 from Covestro Polymers (China) Co., Ltd.

Organosilicon coating material 1: available under the trade name of PHC587C2 from Momentive Performance Materials.

Organosilicon coating material 2: available under the trade name of SHP470 FT2050 from Momentive Performance Materials.

Organosilicon coating material 3: available under the trade name of AS4700 from Momentive Performance Materials.

### Comparative Example 1

An assembly was prepared as follows:

### Step i: providing a substrate

By standard injection molding, a plate having the dimensions of 150 mm×100 mm×2 mm was prepared using a polycarbonate, with the mold temperature controlled at 90-110°C.

### Step ii: forming a coating on one surface of the substrate

By flow coating, an organosilicon coating material 1 (available under the trade name of PHC587C-2 from Momentive Performance Materials) was applied onto the substrate to form a coating with a thickness of 4-10 µm. Specifically, in a clean room, the substrate was blown with deionized air to remove static electricity, and then the surface of the substrate was washed with isopropanol. After the isopropanol completely volatilized, the coating material was applied onto one surface of the substrate by flow coating, flashed off at room temperature (23-25°C) and 35-55 RH% humidity for 10 minutes, and then placed in an oven for baking at the temperature of 127°C for 40 minutes to form a coating.

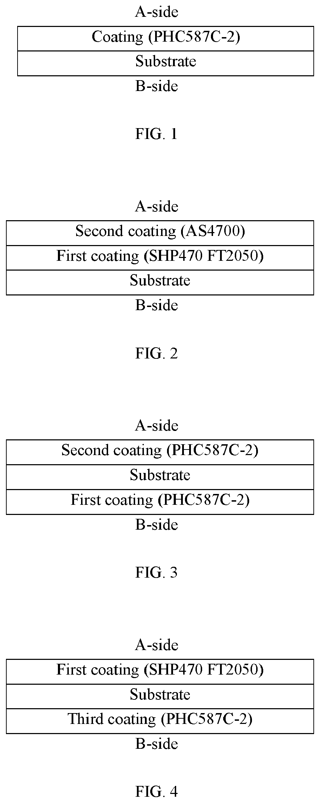

The resulting assembly is hereinafter referred to as sample 1. The schematic diagram of the structure of sample 1 is shown in FIG. 1.

### Comparative Example 2

An assembly was prepared as follows:

### Step i: providing a substrate

By standard injection molding, a plate having the dimensions of 150 mm×100 mm×2 mm was prepared using a polycarbonate, with the mold temperature controlled at 90-110°C.

### Step ii: forming a first coating on one surface of the substrate

By flow coating, an organosilicon coating material 2 (available under the trade name of SHP470 FT2050 from Momentive Performance Materials) was applied onto the substrate to form a first coating with a thickness of 4-10 µm. Specifically, in a clean room, the substrate was blown with deionized air to remove static electricity, and then the surface of the substrate was washed with isopropanol. After the isopropanol completely volatilized, the coating material was applied onto one surface of the substrate by flow coating, flashed off at room temperature (23-25°C) and 35-55 RH% humidity for 10 minutes, and then placed in an oven for baking at the temperature of 127°C for 40 minutes to form a first coating.

### Step iii: forming a second coating on the first coating

By flow coating, an organosilicon coating material 3 (available under the trade name of AS4700 from Momentive Performance Materials) was applied onto the first coating to form a second coating with a thickness of 2-6 µm. Specifically, in a clean room, the first coating was blown with deionized air to remove static electricity, and then the first coating was washed with isopropanol. After the isopropanol completely volatilized, the coating material was applied onto the first coating by flow coating, flashed off at room temperature (23-25°C) and 35-55 RH% humidity for 10 minutes, and then placed in an oven for baking at the temperature of 127°C for 40 minutes to form a second coating.

The resulting assembly is hereinafter referred to as sample 2. The schematic diagram of the structure of sample 2 is shown in FIG. 2.

### Comparative Example 3

An assembly was prepared as follows:

### Step i: providing a substrate

By standard injection molding, a plate having the dimensions of 150 mm×100 mm×2 mm was prepared using a polycarbonate, with the mold temperature controlled at 90-110°C.

### Step ii: forming coatings on two surfaces of the substrate

By flow coating, an organosilicon coating material 1 (available under the trade name of PHC587C-2 from Momentive Performance Materials) was applied onto two surfaces of the substrate respectively to form coatings (a first coating and a second coating) with a thickness of 4-10 µm. Specifically, in a clean room, the substrate was blown with deionized air to remove static electricity, and then the surface of the substrate was washed with isopropanol. After the isopropanol completely volatilized, the coating material was applied onto two surfaces of the substrate by flow coating, flashed off at room temperature (23-25°C) and 35-55 RH% humidity for 10 minutes, and then placed in an oven for baking at the temperature of 127°C for 40 minutes to form the coatings respectively.

The resulting assembly is hereinafter referred to as sample 3. The schematic diagram of the structure of sample 3 is shown in FIG. 3.

### Comparative Example 4

An assembly having a first coating and a second coating on one surface of the substrate was formed in accordance with steps i-iii in Comparative Example 2. Then, the following step iv was carried out.

### Step iv: forming a third coating on the other surface of the substrate

By flow coating, an organosilicon coating material 1 (available under the trade name of PHC587C-2 from Momentive Performance Materials) was applied onto the other surface of the substrate to form a coating with a thickness of 4-10 µm. Specifically, in a clean room, the substrate was blown with deionized air to remove static electricity, and then the surface of the substrate was washed with isopropanol. After the isopropanol completely volatilized, the coating material was applied onto the other surface of the substrate by flow coating, flashed off at room temperature (23-25°C) and 35-55 RH% humidity for 10 minutes, and then placed in an oven for baking at the temperature of 127°C for 40 minutes to form a coating.

The resulting assembly is hereinafter referred to as sample 4. The schematic diagram of the structure of sample 4 is shown in FIG. 4.

### Comparative Example 5

An assembly was prepared as follows:

### Step i: providing a substrate

By standard injection molding, a plate having the dimensions of 150 mm×100 mm×2 mm was prepared using a polycarbonate, with the mold temperature controlled at 90-110°C.

### Step ii: forming a coating on one surface of the substrate

By the PVD process, silicon dioxide (SiO₂) and titanium pentoxide (Ti₃O₅) were applied onto one surface of the substrate to form a coating consisting of each sublayer in Table 5. Specifically, prior to PVD, the destaticizing treatment was carried out for 30 seconds. Then, in a vacuum chamber, baking was carried out at 120°C for 20 minutes to heat and evaporate the coating materials in a container through heating with electron beams, so that the atoms or molecules vaporized and escaped from the surface to form a vapor flow incident on the surface of the substrate. This process was repeated to alternately coat SiO₂ and Ti₃O₅ onto the surface of the substrate to form a coating.

**Table 5**

| | |
|---|---|
| SiO₂ | 25nm |
| Ti₃O₅ | 100.61nm |
| SiO₂ | 46.50nm |
| Ti₃O₅ | 30.78nm |
| SiO₂ | 42.65nm |

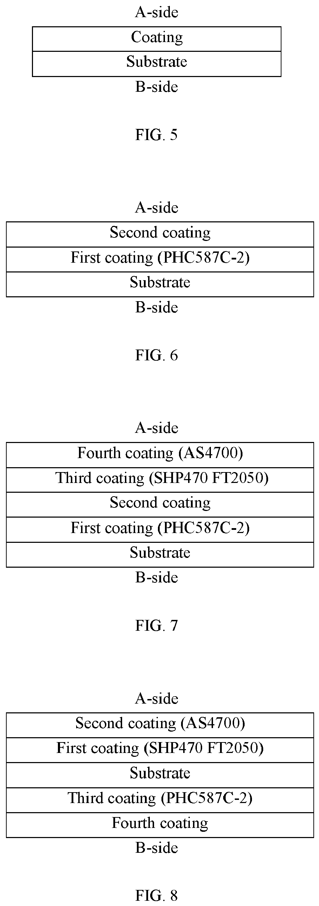

The resulting assembly is hereinafter referred to as sample 5. The schematic diagram of the structure of sample 5 is shown in FIG. 5.

### Comparative Example 6

An assembly having a coating (herein referred to as a first coating) on one surface of the substrate was formed in accordance with steps i and ii in Comparative Example 1. Then, the following step iii was carried out.

### Step iii: forming a second coating on the first coating

By the PVD process, silicon dioxide (SiO₂) and titanium pentoxide (Ti₃O₅) were applied onto the first coating to form a second coating with a thickness in the range of 50-200 nm. Specifically, prior to PVD, the destaticizing treatment was carried out for 30 seconds. Then, in a vacuum chamber, baking was carried out at 120°C for 20 minutes to heat and evaporate the coating materials in a container through heating with electron beams, so that the atoms or molecules thereof vaporized and escaped from the surface to form a vapor flow incident on the surface of the first coating. This process was repeated to alternately coat SiO₂ and Ti₃O₅ onto the surface of the first coating to form a second coating. The second coating has the same composition and structure as the coating in Comparative Example 5.

The resulting assembly is hereinafter referred to as sample 6. The schematic diagram of the structure of sample 6 is shown in FIG. 6.

### Comparative Example 7

An assembly having a first coating and a second coating on one surface of the substrate was formed in accordance with steps i and ii in Comparative Example 1 and step iii in Comparative Example 6. Then, the following steps iv and v were carried out.

### Step iv: forming a third coating on the second coating

By flow coating, an organosilicon coating material 2 (available under the trade name of SHP470 FT2050 from Momentive Performance Materials) was applied onto the second coating to form a third coating with a thickness of 1-3 µm. Specifically, in a clean room, the second coating was blown with deionized air to remove static electricity, and then the surface of the second coating was washed with isopropanol. After the isopropanol completely volatilized, the coating material was applied onto the second coating by flow coating, flashed off at room temperature (23-25°C) and 35-55 RH% humidity for 10 minutes, and then placed in an oven for baking at the temperature of 127°C for 40 minutes to form a third coating.

### Step v: forming a fourth coating on the third coating

By flow coating, an organosilicon coating material 3 (available under the trade name of AS4700 from Momentive Performance Materials) was applied onto the third coating to form a fourth coating with a thickness of 2-8 µm. Specifically, in a clean room, the third coating was blown with deionized air to remove static electricity, and then the surface of the third coating was washed with isopropanol. After the isopropanol completely volatilized, the coating material was applied onto the third coating by flow coating, flashed off at room temperature (23-25°C) and 35-55 RH% humidity for 10 minutes, and then placed in an oven for baking at the temperature of 127°C for 40 minutes to form a fourth coating.

The resulting assembly is hereinafter referred to as sample 7. The schematic diagram of the structure of sample 7 is shown in FIG. 7.

### Inventive Example 1

A LiDAR window was prepared as follows:

### Step i: providing a substrate

By standard injection molding, a plate having the dimensions of 150 mm×100 mm×2 mm was prepared using a polycarbonate, with the mold temperature controlled at 90-110°C.

### Step ii: forming a first coating (a first protective layer) on one surface of the substrate

By flow coating, an organosilicon coating material 2 (available under the trade name of SHP470 FT2050 from Momentive Performance Materials) was applied onto the substrate to form a first coating with a thickness of 1-3 µm. Specifically, in a clean room, the substrate was blown with deionized air to remove static electricity, and then the surface of the substrate was washed with isopropanol. After the isopropanol completely volatilized, the coating material was applied onto one surface of the substrate by flow coating, flashed off at room temperature (23-25°C) and 35-55 RH% humidity for 10 minutes, and then placed in an oven for baking at the temperature of 127°C for 40 minutes to form a first coating.

### Step iii: forming a second coating (a second protective layer) on the first coating

By flow coating, an organosilicon coating material 3 (available under the trade name of AS4700 from Momentive Performance Materials) was applied onto the first coating to form a second coating with a thickness of 2-8 µm. Specifically, in a clean room, the first coating was blown with deionized air to remove static electricity, and then the surface of the first coating was washed with isopropanol. After the isopropanol completely volatilized, the coating material was applied onto the first coating by flow coating, flashed off at room temperature (23-25°C) and 35-55 RH% humidity for 10 minutes, and then placed in an oven for baking at the temperature of 127°C for 40 minutes to form a second coating.

### Step iv: forming a third coating (an adhesive layer) on the other surface of the substrate

By flow coating, an organosilicon coating material 1 (available under the trade name of PHC587C-2 from Momentive Performance Materials) was applied onto the other surface of the substrate to form a third coating with a thickness of 4-10 µm. Specifically, in a clean room, the other surface of the substrate was blown with deionized air to remove static electricity, and then washed with isopropanol. After the isopropanol completely volatilized, the coating material was applied onto the other surface of the substrate by flow coating, flashed off at room temperature (23-25°C) and 35-55 RH% humidity for 10 minutes, and then placed in an oven for baking at the temperature of 127°C for 40 minutes to form a third coating.

### Step v: forming a fourth coating (an anti-reflection layer) on the third coating

By the PVD process, silicon dioxide (SiO₂) and titanium pentoxide (Ti₃O₅) were applied onto the third coating to form a fourth coating with a thickness in the range of 50-200 nm. Specifically, prior to PVD, the destaticizing treatment was carried out for 30 seconds. Then, in a vacuum chamber, baking was carried out at 120°C for 20 minutes to heat and evaporate the coating materials in a container through heating with electron beams, so that the atoms or molecules thereof vaporized and escaped from the surface to form a vapor flow incident on the surface of the third coating. This process was repeated to alternately coat SiO₂ and Ti₃O₅ onto the surface of the third coating to form a fourth coating. The fourth coating has the same composition and structure as the coating in Comparative Example 5. The resulting assembly is hereinafter referred to as sample 8.

The schematic diagram of the structure of sample 8 is shown in FIG. 8.

### Inventive Example 2

Steps i-v in Inventive Example 1 were first carried out, followed by step vi.

### Step vi: forming a fifth coating (an additional anti-reflection layer) on the second coating

By the ICPCVD process, a fifth coating with a thickness in the range of 50-550 nm consisting of each sublayer in Table 6 was formed on the second coating. Specifically, prior to ICPCVD, the destaticizing treatment was carried out for 30 seconds. Then, the following process parameters were utilized to form a fifth coating: pressure: 1-10 mTorr, plasma density: about 5×10¹¹/cm², deposition temperature: 80°C. The materials for forming the SiO₂ layer are nitrogen and oxygen, and the materials for forming the silicon nitride layer are nitrogen and silane.

**Table 6**

| | |
|---|---|
| SiO₂ | 153nm |
| Silicon nitride | 147.44nm |
| SiO₂ | 41nm |
| Silicon nitride | 20.47nm |
| SiO₂ | 150nm |

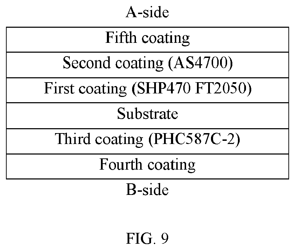

The resulting assembly is hereinafter referred to as sample 9. The schematic diagram of the structure of sample 9 is shown in FIG. 9.

### Performance Testing

Samples 1-9 were tested in terms of infrared transmittance, adhesion, weather resistance, scratch resistance, salt mist resistance, and environmental resistance, respectively.

### Infrared transmittance

Samples 1-9 were tested for transmittance to infrared rays with a wavelength of 905 nm at 0°, 30°, 60° incident angles with a UV-3600Plus UV-VIS-NIR spectrophotometer, in accordance with the method described in ISO13468-2:2006.

The test results are summarized in Table 7.

**Table 7**

| | | **Infrared Transmittance (%)** | | |
|---|---|---|---|---|
| | | 0° | 30° | 60° |
| Comparative Example 1 | Sample 1 | 90.64 | 87.37 | 78.70 |
| Comparative Example 2 | Sample 2 | 91.25 | 90.88 | 81.35 |
| Comparative Example 3 | Sample 3 | 92.55 | 92.16 | 81.87 |
| Comparative Example 4 | Sample 4 | 91.89 | 91.63 | 81.45 |
| Comparative Example 5 | Sample 5 | 94.53 | 94.80 | 86.77 |
| Comparative Example 6 | Sample 6 | 94.07 | 93.95 | 87.28 |
| Comparative Example 7 | Sample 7 | 87.50 | 90.00 | 77.35 |
| Inventive Example 1 | Sample 8 | 95.69 | 95.91 | 88.18 |
| Inventive Example 2 | Sample 9 | 96.21 | 95.63 | 88.23 |

As can be seen from Table 7, the samples prepared in Comparative Example 6 and Inventive Examples 1 and 2 meet the optical requirements for the LiDAR window.

### Adhesion

Samples 1-9 were tested for adhesion with a cross-cut tester, in accordance with the standard ISO2409-2007 (Test conditions: boiled in water at 98°C for 4 hours and soaked in water at 60°C for 24 hours). The results were rated on a 0-5 scale, with 0 being the best and 5 being the worst. Only the side facing the external environment (A-side) was tested, or the A-side and the other side opposite to it (B-side) were tested at the same time. The A-side and the B-side are shown in FIGS. 1-9.

The test results are summarized in Table 8.

**Table 8**

| | | | Adhesion grade | |
|---|---|---|---|---|
| | | | Boiled in water | Soaked in water |
| Comparative Example 1 | Sample 1 | A-side | 0 | 0 |
| | | B-side | - | - |
| Comparative Example 2 | Sample 2 | A-side | 0 | 0 |
| | | B-side | - | - |
| Comparative Example 3 | Sample 3 | A-side | 0 | 0 |
| | | B-side | 0 | 0 |
| Comparative Example 4 | Sample 4 | A-side | 0 | 0 |
| | | B-side | 0 | 0 |
| Comparative Example 5 | Sample 5 | A-side | 5 | 5 |
| | | B-side | - | - |
| Comparative Example 6 | Sample 6 | A-side | 5 | 0 |
| | | B-side | - | - |
| Comparative Example 7 | Sample 7 | A-side | 0 | 0 |
| | | B-side | - | - |
| Inventive Example 1 | Sample 8 | A-side | 0 | 0 |
| | | B-side | 0 | 0 |
| Inventive Example 2 | Sample 9 | A-side | 0 | 0 |
| | | B-side | 0 | 0 |

| | | | | |
|---|---|---|---|---|
| -: not tested | | | | |

As can be seen from Table 8, the samples prepared in Comparative Examples 1-4 and 7, and Inventive Examples 1 and 2 have good adhesion.

### Weather resistance

The A-sides of samples 1-9 were tested for weather resistance in an Atlas4000 flash light aging chamber, in accordance with the standard SAE J2527-2004 (Xenon Lamp Aging Test in the dry and wet states).

Test conditions: illumination wavelength: 340 nm; radiation intensity: 0.75 w/cm²; dry/wet state duration: 102/18 min; total radiation energy: 4500 KJ; irradiation intensity: 0.55 W/m².

The results are shown in Table 9, wherein the change in appearance indicates whether there are undesirable phenomena such as chalking, delamination, brittleness, frosting, air bubbles, and stickiness occurring on the surface of the sample.

**Table 9**

| | | Gloss retention rate (%) | Change in color ΔE | Change in appearance | Infrared transmission retention rate (%) |
|---|---|---|---|---|---|
| Comparative Example 1 | Sample 1 | 88 | 2 | Good appearance | 98 |
| Comparative Example 2 | Sample 2 | 90 | 1.2 | Good appearance | 99 |
| Comparative Example 3 | Sample 3 | 88 | 2 | Good appearance | 98 |
| Comparative Example 4 | Sample 4 | 90 | 1.2 | Good appearance | 99 |
| Comparative Example 5 | Sample 5 | 80 | 10.5 | Discoloration, coating delamination | 93 |
| Comparative Example 6 | Sample 6 | 80 | 10.5 | Discoloration, coating delamination | 93 |
| Comparative Example 7 | Sample 7 | 90 | 1.2 | Good appearance | 99 |
| Inventive Example 1 | Sample 8 | 90 | 1.2 | Good appearance | 99 |
| Inventive Example 2 | Sample 9 | 93 | 1.0 | Good appearance | 98 |

As can be seen from Table 9, the samples prepared in Comparative Examples 1-4 and 7, and Inventive Examples 1 and 2 have good weather resistance.

### Scratch resistance

The A-sides of samples 1-9 were subjected to the Taber abrading wheel test, in accordance with the standard ASTM D 1044-05. Test conditions: 500g load/500 revolutions.

The scratched samples were tested for the gloss retention rate and the infrared transmission retention rate at an incident angle of 0°, and the appearance of the samples was observed. The results are shown in Table 10. When the gloss retention rate reaches 80% and the infrared transmission retention rate reaches 95%, it is considered that the samples have good scratch resistance.

**Table 10**

| | | Gloss retention rate (%) | Infrared transmission retention rate (%) | Appearance |
|---|---|---|---|---|
| Comparative Example 1 | Sample 1 | 75 | 96 | Slight abrading wheel imprint |
| Comparative Example 2 | Sample 2 | 81 | 97 | Slight abrading wheel imprint |
| Comparative Example 3 | Sample 3 | 75 | 96 | Slight abrading wheel imprint |
| Comparative Example 4 | Sample 4 | 81 | 97 | Slight abrading wheel imprint |
| Comparative Example 5 | Sample 5 | 70 | 91 | Coating delamination |
| Comparative Example 6 | Sample 6 | 70 | 91 | Coating delamination |
| Comparative Example 7 | Sample 7 | 81 | 97 | Slight abrading wheel imprint |
| Inventive Example 1 | Sample 8 | 81 | 97 | Slight abrading wheel imprint |
| Inventive Example 2 | Sample 9 | 87 | 96.5 | Apparent abrading wheel imprint |

As can be seen from Table 10, the samples prepared in Comparative Examples 2, 4 and 7, and Inventive Examples 1 and 2 have good scratch resistance.

### Salt mist resistance

Samples 1-9 were subjected to the salt mist test, in accordance with the standard GB/T2423.17-2008, and then tested for infrared transmittance at 0°, 30°, and 60° incident angles.

The results are shown in Table 11.

**Table 11**

| | | Infrared Transmission | | |
|---|---|---|---|---|
| | | 0° | 30° | 60° |
| Comparative Example 1 | Sample 1 | 88.51 | 87.04 | 78.06 |
| Comparative Example 2 | Sample 2 | 90.36 | 90.05 | 80.91 |
| Comparative Example 3 | Sample 3 | 91.57 | 91.17 | 81.52 |
| Comparative Example 4 | Sample 4 | 90.76 | 90.69 | 81.24 |
| Comparative Example 5 | Sample 5 | 92.07 | 91.78 | 85.67 |
| Comparative Example 6 | Sample 6 | 92.34 | 91.47 | 87.95 |
| Comparative Example 7 | Sample 7 | 86.53 | 86.11 | 76.89 |
| Inventive Example 1 | Sample 8 | 94.68 | 94.38 | 87.95 |
| Inventive Example 2 | Sample 9 | 95.80 | 95.10 | 87.60 |

As can be seen from Table 11, the samples prepared in Inventive Examples 1 and 2, after going through the salt mist test, still meet the optical requirements described in the present application.

### Environmental resistance

Samples 1-9 were subjected to the environmental test (85°C/85 RH %, 300h), in accordance with the standard GB/T19394-2003, and then tested for infrared transmittance at the incident angles of 0°, 30°, and 60°.

The results are shown in Table 12.

**Table 12**

| | | Infrared transmission | | |
|---|---|---|---|---|
| | | 0° | 30° | 60° |
| Comparative Example 1 | Sample 1 | 88.64 | 87.06 | 78.23 |
| Comparative Example 2 | Sample 2 | 90.37 | 90.13 | 80.98 |
| Comparative Example 3 | Sample 3 | 91.86 | 91.19 | 81.66 |
| Comparative Example 4 | Sample 4 | 91.43 | 90.77 | 81.48 |
| Comparative Example 5 | Sample 5 | 92.37 | 91.92 | 85.74 |
| Comparative Example 6 | Sample 6 | 92.94 | 91.68 | 87.58 |
| Comparative Example 7 | Sample 7 | 86.62 | 86.24 | 76.63 |
| Inventive Example 1 | Sample 8 | 94.81 | 94.51 | 88.12 |
| Inventive Example 2 | Sample 9 | 95.6 | 94.8 | 87.4 |

As can be seen from Table 12, the samples prepared in Inventive Examples 1 and 2, after going through the environmental test, still meet the optical requirements described in the present application.

The LiDAR window of the present invention can meet the functional requirement of optical anti-reflection and the use requirement of automotive exterior decoration, and can be used in a sensor system.

Only exemplary embodiments or examples of the present invention are described above, and they are not intended to limit the present invention. For a person of ordinary skill in the art, the present invention may be modified or changed in various manners. Any modification, equivalent replacement, improvement and the like made without departing from the spirit and principles of the present invention shall fall within the scope of the claims of the present application.

## Claims

1. A LiDAR window, comprising the following layers stacked together in the order of:
a protective layer;
a substrate prepared from a thermoplastic material;
an adhesive layer; and
an anti-reflection layer with a refractive index in the range of 1.3-2.4 and a thickness in the range of 50-600 nm, said anti-reflection layer comprising two or more anti-reflection sublayers, wherein at least one anti-reflection sub-layer has a refractive index in the range of 1.5-2.4,
wherein the LiDAR window has a transmittance to infrared rays with a wavelength of 905 nm of at least 94% at an incidence angle of 0°, and a transmittance to infrared rays with a wavelength of 905 nm of at least 87% at an incidence angle of 60°, as measured in accordance with the method described in ISO 13468-2: 2006; and
the LiDAR window has a gloss retention rate of not less than 70%, as measured in accordance with ASTM D 1044-05.

2. The LiDAR window of Claim 1, wherein the protective layer is formed with an organosilicon coating material, an acrylate coating material, or an organosilicon-acrylate coating material with a refractive index in the range of 1.20-1.55.

3. The LiDAR window of Claim 1 or 2, wherein the substrate has a transmittance to infrared rays with a wavelength of 905 nm of at least 85% at an incident angle of 0°, as measured in accordance with the method described in DIN ISO 13468-2:2006.

4. The LiDAR window of any one of Claims 1 to 3, wherein the thermoplastic material has a transmittance in the range of 380-780 nm of less than 25.0%, as measured in accordance with DIN ISO 13468-2:2006 (D65, 10°) at a layer thickness of 4 mm.

5. The LiDAR window of any one of Claims 1 to 4, wherein the substrate is prepared from a thermoplastic material comprising a polymer resin selected from the group consisting of: polycarbonate (PC), polyetherimide (PEI), polyimide (PI), polysulfone (PSU), polyarylate (PAR), polyethersulfone (PES) and polyphenylsulfone (PPSU); preferably, the polymer resin is selected from a homopolycarbonate based on monomeric bisphenol A or a copolycarbonate based on bisphenol A and 1,1-bis(4-hydroxyphenyl)-3,3,5-trimethylcyclohexane.

6. The LiDAR window according to any one of Claims 1 to 5, wherein the adhesive layer is formed with an organosilicon coating material, an acrylate coating material, or an organosilicon-acrylate coating material with a refractive index in the range of 1.20-1.55.

7. The LiDAR window according to any one of Claims 1 to 6, wherein the anti-reflection layer can be formed with a material selected from the group consisting of MgF₂, SiO₂, Al₂O₃, Ti₂O₃, Ti₃O₅, Nb₂O₃, ZrO₂ and silicon nitride; preferably, the anti-reflection layer is composed of two or more sublayers of the same or different thickness, comprising different materials selected from the group consisting of MgF₂, SiO₂, Al₂O₃, Ti₂O₃, Ti₃O₅, Nb₂O₃, ZrO₂ and silicon nitride, wherein each sublayer has a thickness in the range of 10-300 nm.

8. The LiDAR window according to any one of Claims 1 to 7, wherein the anti-reflection layer comprises:
alternately arranged SiO₂ layers and Ti₃O₅ layers, wherein each SiO₂ layer has a thickness in the range of 10-60 nm, and each Ti₃O₅ layer has a thickness in the range of 10-200 nm;
alternately arranged SiO₂ layers and Nb₂O₅ layers, wherein each SiO₂ layer has a thickness in the range of 20-150 nm, and each Nb₂O₅ layer has a thickness in the range of 10-100 nm; or
alternately arranged SiO₂ layers and ZrO₂ layers, wherein each SiO₂ layer has a thickness in the range of 20-150 nm, and each ZrO₂ layer has a thickness in the range of 10-100 nm.

9. The LiDAR window according to any one of Claims 1 to 8, further comprising an additional anti-reflection layer disposed on the protective layer; preferably, the additional anti-reflection layer being formed with a material selected from the group consisting of SiO₂, Nb₂O₃, ZrO₂ and silicon nitride, with a thickness in the range of 50-600 nm; more preferably, the additional anti-reflection layer comprising alternately arranged SiO₂ layers and silicon nitride layers, wherein each SiO₂ layer has a thickness in the range of 10-60 nm, and each silicon nitride layer has a thickness in the range of 10-200 nm.

10. A method for preparing the LiDAR window according to any one of Claims 1 to 9, comprising the steps of:
i) providing a substrate;
ii) forming an adhesive layer and a protective layer respectively on two opposite surfaces of the substrate;
iii) forming an anti-reflection layer on the adhesive layer; and
iv) optionally, forming an additional anti-reflection layer on the protective layer.

11. The method of Claim 10, wherein the substrate is prepared by injection molding, with the mold temperature controlled within the range of 90-160°C.

12. The method of Claim 10 or 11, wherein the anti-reflection layer is formed by a PVD process; preferably, the coating material for forming an anti-reflection layer is applied onto the adhesive layer by the PVD process, and then annealed at 150-250°C for 1-3 hours, followed by condensation to form an anti-reflection layer.

13. The method of any one of Claims 9 to 12, wherein the additional anti-reflection layer is formed by a CVD process, preferably using the following process parameters: pressure: 1-10 mTorr, plasma density: about 5×10¹¹/cm², deposition temperature: 60-250°C.

14. A sensor system, comprising:
a LiDAR sensor emitting lasers with a wavelength of 800 nm to 1,600 nm; and
the LiDAR window of any one of Claims 1 to 9 partially or completely surrounding the LiDAR sensor,
wherein the protective layer and the LiDAR sensor are disposed towards two opposite sides of the substrate.

15. A vehicle, comprising the sensor system of Claim 14.
